# EUROPEAN PATENT APPLICATION

(11) **EP 2 431 903 A1**
(43) Date of publication of application: **21.03.2012**
(21) Application number: 10775024.2
(22) Date of filing: 13.05.2010
(51) Int. Cl.: G06F 21/20, G06F 13/00, G06F 21/22

(54) **INFORMATION PROCESSOR, EXTERNAL DEVICE EXTENSION SYSTEM, EXTERNAL DEVICE EXTENSION METHOD, EXTERNAL DEVICE EXTENSION PROGRAM, AND PROGRAM RECORDING MEDIUM**

(30) Priority: 14.05.2009 JP 2009117598
(71) Applicant: NEC Corporation, Tokyo 108-8001 (JP)
(72) Inventor: KATO, Hiromu, Tokyo 108-8001 (JP)
(74) Representative: Betten & Resch
(86) International application number: PCT/JP2010/058480
(87) International publication number: WO 2010/131771

(57) **Abstract**

By effectively using various functions of other terminals, the convenience of an information processing device is improved.

An information processing device comprises short distance wireless communication means for transmitting and receiving short distance radio signal by a short distance wireless communication, storage means in which a plurality of setting functions are registered, and device control means for selecting a predetermined setting function from the storage means when the short distance wireless communication means receives a short distance radio signal, and sets a function relating to the selected setting function to a transmission source of the short distance radio signal.

## Description

### Technical Field

The present invention relates to an information processing device, an external device extension system, an external device extension method, an external device extension program, and a program recording medium using an information processing device and a portable information terminal which transmits and receives a short distance radio signal with each other by short distance wireless communication.

### Background Art

A technology to control other equipments using a portable communication terminal is, for example disclosed in patent documents 1 to 3. In patent documents 1 to 3, it is possible to perform mutual authentication with other equipments using a portable communication terminal and to control other equipments using a portable communication terminal.

### Prior Art Documents

### Patent Documents

Patent document 1: Japanese Patent Application Laid-Open No. 2000-99187
Patent document 2: Japanese Patent Application Laid-Open No. 2005-217646
Patent document 3:WO03/015451 A1

### Summary of the Invention

### Problems to be resolved by the invention

In recent years, diversification and sophistication of functions of various terminals such as a portable communication terminal are advancing. Accordingly, as in patent documents 1 to 3, not only using a portable information terminal for a specific use such as the mutual authentication or the control with other equipments, but also using variously the numerous functions of the terminal such as a portable information terminal is desirable.

By effectively using the various functions provided in the other terminals, the object of the present invention is to provide an information processing device, an external device extension system, an external device extension method, an external device extension program and a program recording medium capable of improving convenience.

### Means of Solving the Problems

In order to achieve the above-mentioned object, an information processing device comprises short distance wireless communication means for transmitting and receiving short distance radio signal by a short distance wireless communication, storage means in which a plurality of setting functions are registered, and device control means for selecting a predetermined setting function from the storage means when the short distance wireless communication means receives a short distance radio signal, and sets a function relating to the selected setting function to a transmission source of the short distance radio signal.

Further, a function extension system is an extension system equipped with the above-mentioned information processing device and a portable information terminal. Here, the device control means sets the function related to the selected setting function to a portable information terminal. On the other hand, the portable information terminal comprises short distance wireless communication means for transmitting and receiving a short distance radio signal by short distance wireless communication, and terminal control means for having operated as an external device of an information processing device on the set function.

Further, a function extension method uses an information processing device. Here, the information processing device comprises storage means in which a plurality of setting functions are registered, and the function extension method comprises selecting a predetermined setting function from the storage means when receiving a short distance radio signal and setting a function relating to the selected setting function to a transmission source of the short distance radio signal.

Further, an external device extension program is for controlling a computer of an information processing device equipped with storage means in which a plurality of setting functions are registered. Then, it makes a computer carry out the procedure of selecting the predetermined setting function from the storage means when receiving a short distance radio signal, and the procedure of setting a function relating to the selected setting function to a transmission source of the short distance radio signal.

Further, it is a computer-readable recording medium and makes a computer of an information processing device equipped with a storage means in which a plurality of setting functions are registered to carry out a procedure for selecting the predetermined setting function from the storage means when receiving a short distance radio signal, and setting the function relating to the selected setting function to a transmission source of the short distance radio signal.

### The Effect of the Invention

According to an information processing device, an external device extension system, an external device extension method, an external device extension program, and a program recording medium according to the present invention, an information processing device can effectively use a plurality of functions that a transmission source of a short distance radio signal has.

### BRIEF DESCRIPTION OF THE DRAWINGS

[FIG. 1] It is a configuration diagram showing an example of a composition of an information processing device according to a first embodiment.
[FIG. 2] It is an operation flow chart showing an example of a function extension procedure of the information processing device according to the first embodiment.
[FIG. 3] It is a block diagram showing an example of a composition of a function extension system according to a second embodiment.
[FIG. 4] It is a block diagram showing an example of a composition of a function extension system according to a third embodiment.
[FIG. 5] It is a table showing an example of an external function setting table.
[FIG. 6] It is a table showing other examples of the external function setting table.
[FIG. 7] It is a table showing an example of a portable communication terminal setting table.
[FIG. 8] It is a table showing other examples of the portable communication terminal setting table.
[FIG. 9] It is a schematic diagram illustrating a relation between a portable communication terminal and an information processing device.
[FIG. 10] It is a schematic diagram showing the state of using an information processing device as a web camera of a portable communication terminal.

### MODES FOR TARRYING OUT THE INVENTION

Hereinafter, the preferred embodiments of an information processing device, an external device extension system, an external device extension method, an external device extension program, and a program recording medium according to the present invention will be described. Further, in the following description, an information processing device, an external device extension system, and an external device extension method will be described. However, the external device extension method can also be put into effect as an external device extension program that can be executed by a computer, and an external device extension program can also be recorded in a computer-readable recording medium.

### (A first exemplary embodiment)

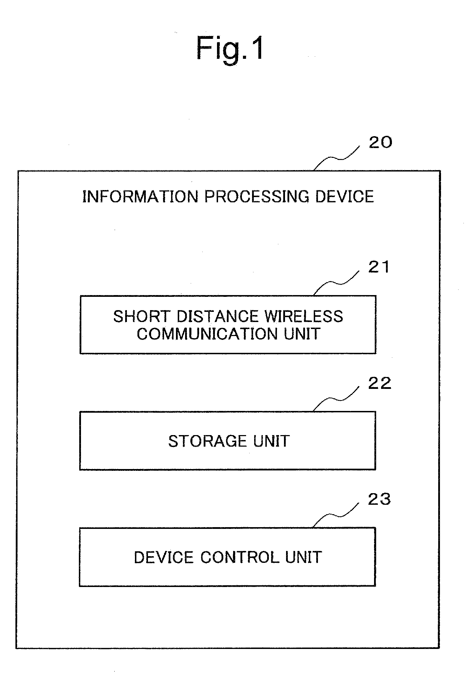

A first exemplary embodiment of the present invention will be described. An example of a block diagram of an information processing device according to the present embodiment is shown in FIG. 1. In FIG. 1, an information processing device 20 includes a short distance wireless communication unit 21, a storage unit 22 and a device control unit 23.

The short distance wireless communication unit 21, by short distance wireless communication, transmits and receives other devices and a short distance radio signal. In the storage unit 22, a plurality of setting functions is registered. In the present embodiment, in the storage unit 22, as a setting function, a storage function, a camera function, a mouse function, and a key input function and the like are registered. The device control unit 23, when the short distance wireless communication unit 21 receives a short distance radio signal, selects the predetermined setting function from the storage unit 22 and sets the function relating to the selected setting function to a device of a transmission source of the short distance radio signal. In the present embodiment, the device control unit 23 makes selection of the predetermined setting function according to the type of the device of transmission source of the short distance radio signal, or makes selection based on the time when receiving a short distance radio signal, or makes selection based on information which the user set in advance.

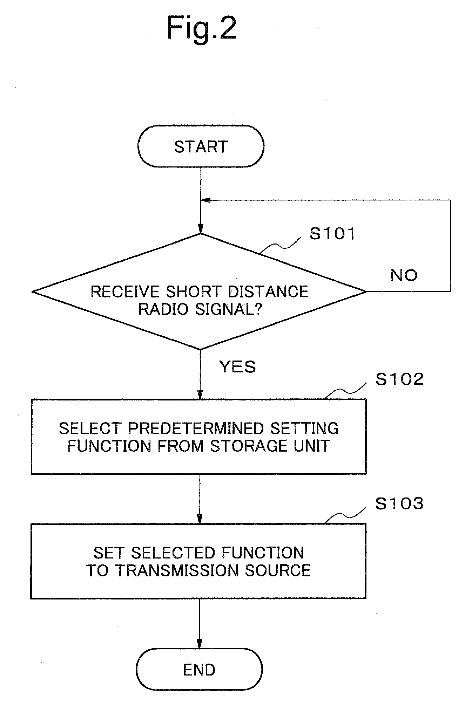

Next, a procedure to extend the function of the information processing device 20 will be described using FIG. 2. In FIG. 2, the short distance wireless communication unit 21 of the information processing device 20, when a short distance radio signal is received (YES of S101), will inform the fact of having received to the device control unit 23. The device control unit 23, when receiving the information relating to the reception of a short distance radio signal, selects the predetermined setting function from the storage unit 22 (S102) and sets the function relating to the selected setting function to a device of a transmission source of the short distance radio signal (S103).

As described above, the information processing device 20, when a short distance radio signal is received, sets the predetermined function to a device of transmission source of the short distance radio signal. The information processing device 20, for example, selects the predetermined setting function from the storage unit 22 based on the type of a device of transmission source of the short distance radio signal, or the time when receiving the short distance radio signal, or information which the user set or the like. The device of transmission source, by having the predetermined function to be set, functions as an external device of the information processing device 20.

As described above, by having the device of transmission source function as an external device of the information processing device 20, the information processing device 20 can use a plurality of functions provided in the device of transmission source as if it is the function which the information processing device 20 has even when it is the function which the information processing device 20 does not originally have. Accordingly, as well as effectively using a plurality of functions that the transmission source has, the convenience of the information processing device 20 improves.

Here, by registering an identification ID of the device of transmission source to the storage unit 22, only when the identification ID of the device of transmission source matches the identification ID registered in the storage unit 22, it is also possible to set the predetermined function to the device of transmission source. That is, the information processing device 20, when receiving a short distance radio signal, acquires the identification ID of the device of transmission source of the short distance radio signal by inputting directly, or receiving as a short distance wireless communication or an e-mail, or the like. Then, only when the acquired identification ID matches with the identification ID registered in the storage unit 22, the predetermined function is set to the device of transmission source. In this case, it is possible to prevent the information processing device 20 being unfairly operated by an ill-willed third party.

Further, by setting an operation unit to the information processing device 20, and when the user performs an input relating to a function extension using the operation unit after the short distance wireless communication unit 21 receives a short distance radio signal, the predetermined function can also be set to the device of transmission source. In this case, when a short distance radio signal is received from a device which is not a target of the function setting, it is possible to prevent the function being automatically set to a device which is not a target of the function setting.

### (A second exemplary embodiment)

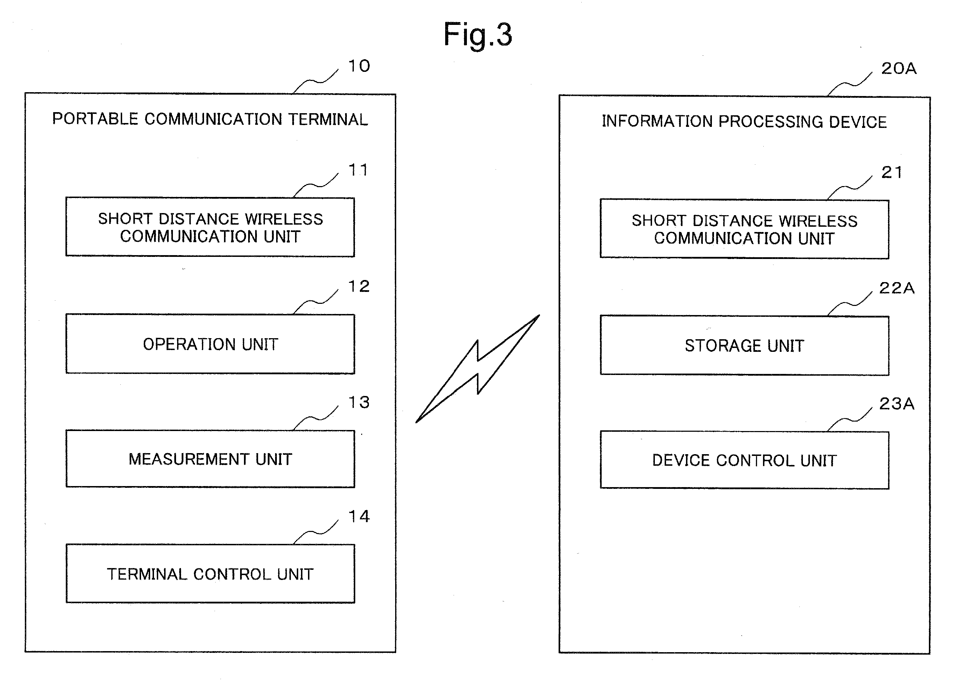

A second exemplary embodiment of the present invention will be described. An extension system according to the present embodiment includes a portable communication terminal 10 and an information processing device 20A. In FIG. 3, an example of a system block diagram of an extension system according to the present embodiment is shown.

In FIG. 3, the portable communication terminal 10 includes a short distance wireless communication unit 11, an operation unit 12, a measurement unit 13 and a terminal control unit 14. The short distance wireless communication unit 11 transmits and receives a short distance radio signal with a terminal or with a device within the range of short distance wireless communication. The operation unit 12 is a keyboard, a mouse, or the like, and accepts input relating to a function extension from the user in the present embodiment. The measurement unit 13, when the operation unit 12 accepts input relating to a function extension from the user, measures the electric field strength around the portable communication terminal 10, and transmits the measurement result to the information processing device 20A using short distance wireless communication, an e-mail, or the like. The terminal control unit 14, on the function being set by the information processing device 20A, as to operate as an external device of the information processing device 20A, controls each means.

On the other hand, the information processing device 20A includes a short distance wireless communication unit 21, a storage unit 22A, and a device control unit 23A. The short distance wireless communication unit 21 transmits and receives a short distance radio signal with a terminal or a device within the range of short distance wireless communication. The storage unit 22A holds terminal identification information and a function setting table. In the present embodiment, to the function setting table, a plurality of setting functions are registered in association with the size of the electric field strength.

The device control unit 23A, when the short distance wireless communication unit 21 receives a short distance radio signal, acquires terminal identification information of the portable communication terminal 10, which has transmitted the short distance radio signal, by short distance wireless communication, an e-mail, or the like, and authenticates the acquired terminal identification information. Then, when it can be authenticated, monitors whether a measurement result of the electric field strength is transmitted or not. The device control unit 23A, when a measurement result is received, refers to a function setting table of the storage unit 22A, selects the setting function that is associated with the received measurement result, and sets the function relating to the selected setting function to the portable communication terminal 10 which has transmitted the short distance radio signal.

For example, the information processing device 20A, when receiving a measurement result indicating a large electric field strength, sets the function as a storage device of an external connection of the information processing device 20A to the portable communication terminal 10. Further, when receiving a measurement result indicating the electric field strength of the medium degree sets a function as a mouse, and when receiving a measurement result indicating a small electric field strength, sets a function as an external camera of the information processing device 20A.

As described above, in the present embodiment, the desired function is selected according to the measured electric field strength and is set to the portable communication terminal 10. Accordingly, based on a positional relation of the portable communication terminal 10 and the information processing device 20A, the most suitable function is set to the portable communication terminal 10

Further, according to the present embodiment, although an example of the information processing device 20A holding a function setting table is indicated, it is also possible to have the portable communication terminal 10 to hold a function setting table. Further, instead of the portable communication terminal 10, a measurement unit for measuring the electric field strength can also be provided to the information processing device 20A.

### (A third exemplary embodiment)

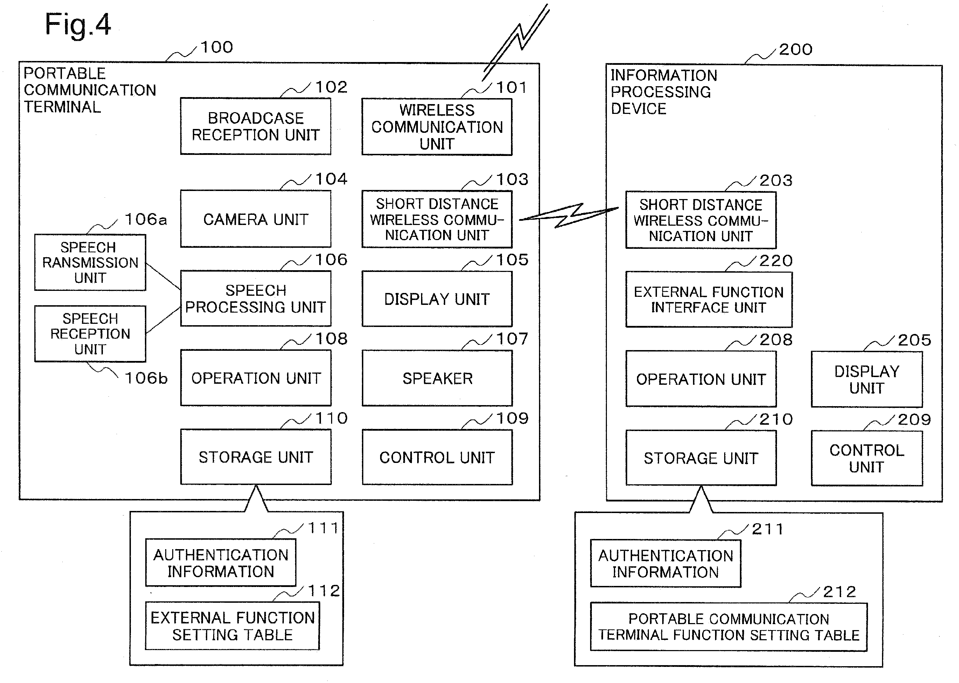

A third exemplary embodiment will be described. FIG. 4 is a block diagram showing an example of block configuration of external function extension system according to the present embodiment. The external function extension system according to the present embodiment operates by program control, and includes a portable communication terminal 100 and an information processing device 200 which can communicate with each other by short distance wireless communication.

The portable communication terminal 100 is a portable terminal such as a mobile phone, a PHS (Personal Handy-Phone System), and a PDA (Personal Digital Assistants), equipped with a communication function. In FIG. 4, the portable communication terminal 100 includes a wireless communication unit 101, a broadcast reception unit 102, a short distance wireless communication unit 103, a camera unit 104, a display unit 105, a speech processing unit 106, a speaker 107, an operation unit 108, a control unit 109, and a storage unit 110.

The wireless communication unit 101 transmits and receives a radio signal with a radio base station device via an antenna which is not illustrated. The broadcast reception unit 102 receives a broadcast signal from a broadcasting station (ground station and satellite) which is not illustrated and demodulates a video data, a speech data, and an information data from the broadcast signal.

The short distance wireless communication unit 103 communicates with other devices using short distance wireless communication systems such as a wireless LAN (Local Area Network) and Bluetooth. The camera unit 104 acquires the surrounding image information. The display unit 105 is a liquid crystal display panel or the like, and deals with video signals such as an image, a figure, a character, and a symbol, and displays a processed signal as information.

The speech processing unit 106 processes a speech signal inputted and outputted via the speech transmission unit 106a (such as a microphone) and a speech reception unit 106b (such as a speaker and earphones). The speaker 107 performs sound making output such as music and an informing sound. The operation unit 108 includes a numerical keypad, a scroll key, a cross key, and an enter key, or the like, and accepts input of various information from the user of the portable communication terminal 100.

The control unit 109 performs control of the various functions and of each unit provided in the portable communication terminal 100 such as a telephone function, a mail function, an internet connection function, a short distance communication function, a camera function, a television reception function, a content playback function, and the like. In the present embodiment, the control unit 109, when receiving a short distance radio signal, authenticates a transmission source of the short distance radio signal. Then, when it can be authenticated, based on the directions from an external function interface unit of authentication partner, controls the predetermined function.

The storage unit 110 stores address book information, transmission and reception mail information, incoming/outgoing call information, content information, application program information, captured image information, and the various setting information of the portable communication terminal 100. In the present embodiment, the storage unit 110 stores an external function setting table 112 and an authentication information 111. Here, the authentication information 111 is information for authenticating the information processing device 200, and is the device ID or a password and the like of the information processing device 200. Further, the description on the external function setting table 112 will hereinafter be described in detail.

On the other hand, the information processing device 200 is a device which performs various information processing of a personal computer and the like. In FIG. 4, the information processing device 200 includes a short distance wireless communication unit 203, a display unit 205, an operation unit 208, an external function interface unit 220, a control unit 209 and a storage unit 210.

The short distance wireless communication unit 203 communicates with other devices using short distance wireless communication systems such as a wireless LAN (Local Area Network) and Bluetooth. The display unit 205 is a liquid crystal display panel or the like, deals with video signals such as an image, a figure, a character, and a symbol, and it is shown to the user as information. The operation unit 208 is a keyboard, a mouse or the like, and accepts input of various information from the user of the information processing device 200.

The external function interface unit 220 is located adjacent to, and controls the interface for information exchange between the partner (portable communication terminal 100) that the mutual authentication is obtained. In the present embodiment, the external function interface unit 220, according to the portable communication terminal 100 and the types of functions set to the portable communication terminal, the external function interface unit 220 performs a conversion and an exchange of information relating to a function control.

The control unit 209 performs control of the various functions and of each unit provided in the information processing device 200 such as various arithmetic processing function, a document processing function, an image processing function, a mail function, an internet connection function, a short distance communication function, a camera function, a television reception function, a content playback function, and the like. In the present embodiment, the control unit 209, when receiving a short distance radio signal, authenticates a transmission source of the short distance radio signal. Then, when it can be authenticated, it allows the user of the authentication partner (portable communication terminal 100) to use the information processing device 200. Further, the predetermined function is set to the authentication partner, and controls the authentication partner using the external function interface unit. Here, in the present embodiment, "to set the function" is a case that the authentication partner, based on information received from the external function interface unit 220, sets as to perform control relating to the predetermined function.

The storage unit 210 stores document information, image information, transmission and reception mail information, content information, application program information, and the various setting information and the like of the information processing device 200. In the present embodiment, the storage unit 210 stores a portable communication terminal function setting table 212 and an authentication information 211. Here, the authentication information 211 is information for authenticating the portable communication terminal 100, and is the terminal ID or a password or the like of the portable communication terminal 100. Further, the description on the portable communication terminal function setting table 212 will hereinafter be described in detail.

Next, the external function setting table 112 and the portable communication terminal function setting table 212 will be described.

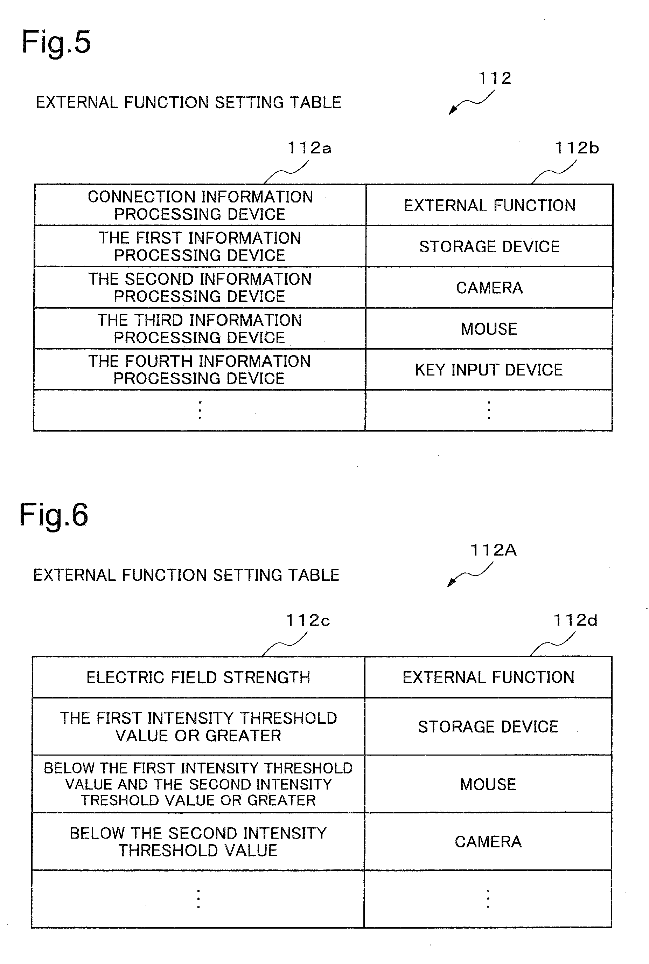

First, the external function setting table 112 will be described. An example of an external function setting table is shown in FIG. 5 and another example is shown in FIG. 6.

In FIG. 5, to the external function setting table 112, a plurality of external functions 112b (such as storage device, camera, mouse, key input device, for example) are registered in association with a connection information processing device 112a. For example, when the information processing device 200 is the first information processing device, the portable communication terminal 100 operates as a storage device of an external connection of the first information processing device. Similarly, the portable communication terminal 100 operates as a camera of the second information processing device when the information processing device 200 is the second information processing device, and operates as a mouse when it is the third information processing device, and operates as a key input device when it is the fourth information processing device.

On the other hand, in FIG. 6, to an external function setting table 112A, a plurality of external functions 112d are registered in association with a size of measured electric field strength 112c. For example, when the measured electric field strength is the first intensity threshold value or smaller (when the distance between the portable communication terminal 100 and the information processing device 200 is short), the portable communication terminal 100 operates as a storage device of an external connection of the information processing device 200. Similarly, the portable communication terminal 100, when the electric field strength is the first intensity threshold value or smaller and is the second intensity threshold value or greater (when the distance between the portable communication terminal 100 and the information processing device 200 is moderate), operates as a mouse. Further, the portable communication terminal 100, when the electric field strength is less than the second intensity threshold value (when the distance between the portable communication terminal 100 and the information processing device 200 is long), operates as a camera.

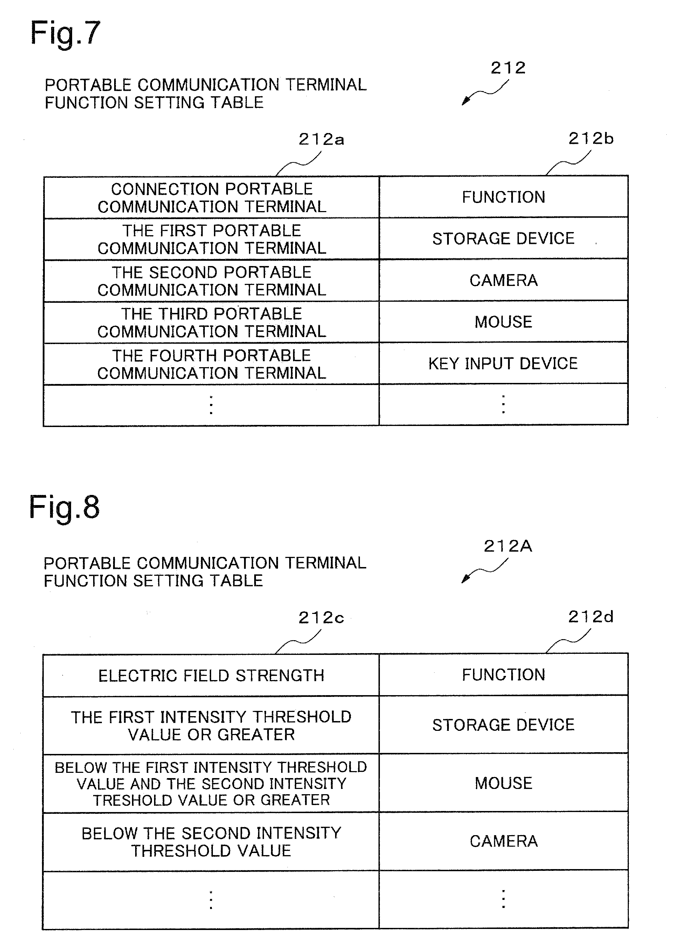

Next, the portable communication terminal function setting table 212 will be described. An example of a portable communication terminal function setting table is shown in FIG. 7 and another example is shown in FIG. 8.

In FIG. 7, to the portable communication terminal function setting table 212, a plurality of functions 212b (such as storage device, camera, mouse, key input device, for example) are registered in association with a connection portable communication terminal 212a. For example, when the portable communication terminal 100 is the first portable communication terminal, it sets the function as a storage device of an external connection to the portable communication terminal 100. In other words, the information processing device 200 sets as to function as an external storage device of the information processing device 200 based on information which the portable communication terminal 100 received from the external function interface unit 220. Similarly, when the portable communication terminal 100 is the second portable communication terminal then the camera function, when it is the third portable communication terminal then the mouse function, and when it is the fourth portable communication terminal then the key input device function is set.

On the other hand, in FIG. 8, to the portable communication terminal function setting table 212A, a plurality of functions 212d are registered in association with the size (distance) of the electric field strength 212c between the portable communication terminal 100 and the information processing device 200. For example, the information processing device 200, when the electric field strength is the first intensity threshold value or greater, sets the function as a storage device of an external connection to the portable communication terminal 100. Similarly, the information processing device 200, when the electric field strength is the first intensity threshold value or smaller and is the second intensity threshold value or greater then the mouse function, when the electric field strength is the second intensity threshold value or smaller then the camera function is set to the portable communication terminal 100.

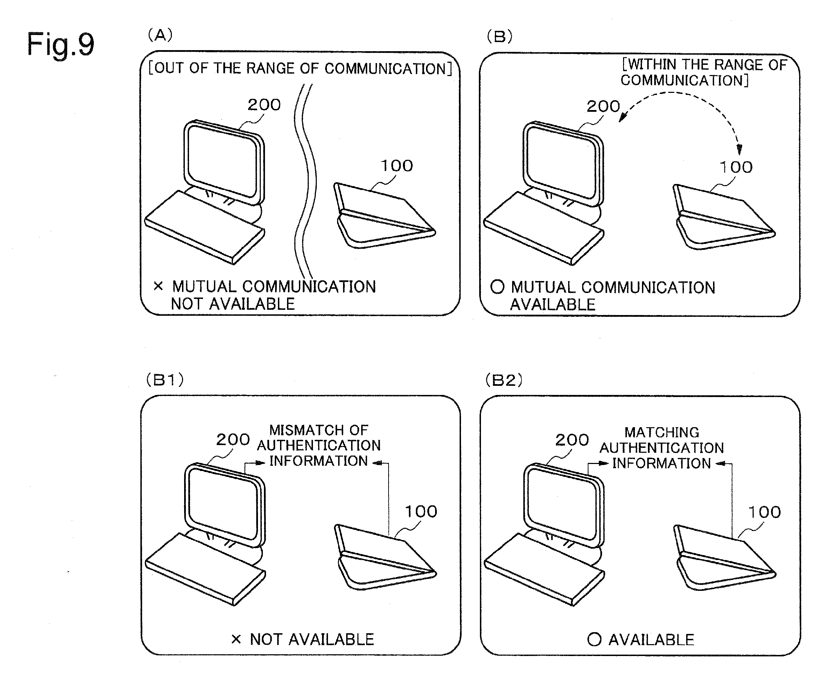

Next, an example of operation of external function extension system according to the present embodiment will be described. First, operation which determines whether or not the portable communication terminal 100 is available as an external device of the information processing device 200 will be described using FIG. 9 (A) and (B).

FIG. 9 (A) indicates the state of the short distance wireless communication unit 103 of the portable communication terminal 100 and the short distance wireless communication unit 203 of the information processing device 200 not being able to communicate with each other because the distance between the portable communication terminal 100 and the information processing device 200 which the user possesses is far. In FIG. 9 (A), the user of the portable communication terminal 100 cannot use the information processing device 200.

FIG. 9 (B) indicates the state of the short distance wireless communication unit 103 of the portable communication terminal 100 and the short distance wireless communication unit 203 of the information processing device 200 being able to communicate by the user approaching the information processing device 200 from the state shown in FIG. 9 (A). In FIG. 9 (B), the portable communication terminal 100 and the information processing device 200 exchange the authentication information 111 and 211 stored in the respective storage units 110 and 210.

In either one of the portable communication terminal 100 and the information processing device 200, when information exchanged with each other as authentication information do not match with the ID, password or the like, of the other side registered in advance, the user of the portable communication terminal 100 cannot use the information processing device 200 (FIG. 9 (B1)).

On the other hand, in each of the portable communication terminal 100 and the information processing device 200, when the exchanged authentication information match with the authentication information registered in advance, the user of the portable communication terminal 100 will be able to use the information processing device 200 (FIG. 9 (B2)).

Then, when the information processing device 200 and the portable communication terminal 100 can authenticate each other, the portable communication terminal 100 and the information processing device 200 further verify whether or not the consistency of the content of the external function setting table 112 and the portable communication terminal function setting table 212 which each refers to, can be maintained. Then, when the consistency of the content of the table which each refers to can be maintained, the function as the external device of the information processing device 200 is set to the portable communication terminal 100. Further, when the consistency of the content in the table cannot be maintained, the function is not set.

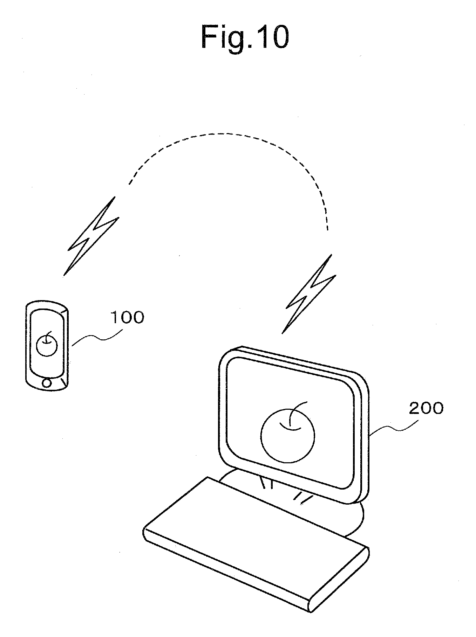

Operation to set the function to the portable communication terminal 100 will be described using FIG. 10. In FIG. 10, the portable communication terminal 100 refers to the external function setting table 112 of FIG. 5, and for example, when the acquired ID matches with the device ID of the second information processing device, selects a camera as the external function 112b. The control unit 109 of the portable communication terminal 100 drives the camera unit 104 based on the directions from the external function interface unit 220 of the information processing device 200, and the portable communication terminal 100 operates as a camera (web camera) for external connections of the information processing device 200.

On the other hand, the information processing device 200 refers to the portable communication terminal function setting table 212 of FIG. 7, and for example, when the acquired ID matches with the terminal ID of the second portable communication terminal, selects a camera. The control unit 209 of the information processing device 200 sets as to function as an external storage device of the information processing device 200 based on information which the portable communication terminal 100 received from the external function interface unit 220. After the function setting, the information processing device 200 controls the portable communication terminal 100 as a camera (web camera) for external connections using the external function interface unit 220. The external function interface unit 220 transmits a signal which controls operation of the portable communication terminal 100 as a camera (web camera) via the short distance wireless communication unit 203, and takes image information which the portable communication terminal 100 acquired in the information processing device 200.

Further, when the portable communication terminal 100 and the information processing device 200 select the function to set to the portable communication terminal 100 by referring to the external function setting table 112A of FIG. 6 and the portable communication terminal function setting table 212A of FIG. 8, it will be as described below.

In the present embodiment, the short distance wireless communication unit 103 of the portable communication terminal 100 and the short distance wireless communication unit 203 of the information processing device 200 have the function to measure the electric field strength for short distance wireless communication. Then, when the operation unit 108 of the portable communication terminal 100 or the operation unit 208 of the information processing device 200 accepts input relating to a function extension from the user, the short distance wireless communication units 103 and 203 measure the electric field strength of that case and transmit to the control units 109 and 209 respectively. The control units 109 and 209 compare the measured electric field strength with the threshold value stored in advance in the storage units 110 and 210.

The control unit 109 of the portable communication terminal 100, refers to the external function setting table 112A of FIG. 6, and for example, when the measured electric field strength is smaller than the second intensity threshold value, selects a camera as the external function 112d. The portable communication terminal 100 drives the camera unit 104 based on the directions from the external function interface unit 220 of the information processing device 200, and the portable communication terminal 100 operates as a camera (web camera) for external connections of the information processing device 200.

On the other hand, the control unit 209 of the information processing device 200, refers to the portable communication terminal function setting table 212A of FIG. 8. and for example, when the measured electric field strength is smaller than the second intensity threshold value, for example, selects a camera as the function 212d. The information processing device 200 controls the portable communication terminal 100 as a camera for external connections using the external function interface unit 220. The external function interface unit 220 transmits a signal which controls operation of the portable communication terminal 100 as a camera (web camera) via the short distance wireless communication unit 203 and takes image information which the portable communication terminal 100 acquired in the information processing device 200.

Even when the information processing device 200 is not equipped with a camera (web camera) as mentioned above, by bringing the portable communication terminal 100 close to the information processing device 200, the camera function which the portable communication terminal 100 has can be used as the function of the information processing device 200. As an external device for external connections of the information processing device 200, it is possible to use the portable communication terminal 100 easily, and the convenience of the information processing device 200 improves.

Further, using a different portable communication terminal 100, or by changing the distance (the electric field strength) between the portable communication terminal 100 and the information processing device 200, the function to be set to the portable communication terminal 100 will be changed. As a result, according to the situation, it will be possible to use the portable communication terminal 100 as external storage device of the information processing device 200, or use it as a mouse of an external connection, or use it as a key input device of an external connection, and a plurality of functions provided in the portable communication terminal 100 can be used effectively.

Further, because the portable communication terminal 100 functions as an external device only when mutual authentication in a short distance possible of short distance communication with the information processing device 200 is acquired, it is possible to prevent a careless leakage of information to a third person.

Here, in the above, although the function to set to the portable communication terminal 100 by both of the portable communication terminal 100 and the information processing device 200 by having a mutual authentication between the portable communication terminal 100 and the information processing device 200 was selected, it is not limited thereto. For example, it is possible for the information processing device 200 to authenticate the portable communication terminal 100 and to notify the portable communication terminal 100 that authentication has been made, or, to have the information processing device 200 to select the function to be set to the portable communication terminal 100 and to notify the portable communication terminal 100.

Further, the user can rewrite the setting contents of the external function setting tables 112 and 112A of FIG. 5 and FIG. 6 and the portable communication terminal function setting tables 212 and 212A of FIG. 7 and FIG. 8. The user, according to the function provided in the respective portable communication terminals 100, can set the function as an external device of the information processing device 200.

Further, to one information processing device 200, by bringing a plurality of portable communication terminals 100 close by, it is possible to use each portable communication terminal 100 as an external device of the information processing device 200 at the same time. On the other hand, by bringing the portable communication terminal 100 close by to a plurality of information processing device 200, it is possible to use a plurality of functions provided in the portable communication terminal to a plurality of information processing device 200 as the external function at the same time respectively.

### (A fourth exemplary embodiment)

A fourth exemplary embodiment will be described. An external device extension system according to the present embodiment is an external device extension system which uses a portable communication terminal as an external device of an information processing device. Here, the portable communication terminal and the information processing device each have at least a short distance wireless communication means which performs wireless communication in short distance between the information processing device or the portable communication terminal in the other side. Further, the information processing device, when receiving wireless communication signal of a short distance from the portable communication terminal, and, when authentication of the portable communication terminal is acquired as a matching result with authentication information registered in advance to the authentication information and the information processing device from the portable communication terminal transmitted as the wireless communication signal, the portable communication terminal is assigned as an external device of the information processing device registered in advance to the function setting table of the information processing device.

Further, the present embodiment can be described as an external device extension method. That is, an external device extension method according to the present embodiment is an external device extension method which uses a portable communication terminal as an external device of an information processing device. Here, the information processing device, when receiving wireless communication signal of a short distance from the portable communication terminal, and, when authentication of the portable communication terminal is acquired as a matching result with authentication information registered in advance to the authentication information and the information processing device from the portable communication terminal transmitted as the wireless communication signal, said portable communication terminal is assigned as an external device of the information processing device registered in advance to the function setting table of the information processing device.

According to the external device extension system and the external device extension method according to the present embodiment, effects can be achieved as follows.

As an external device for external connections of the information processing device, it is possible to use a portable communication terminal having the rich functions easily, and the convenience of an information processing device can be improved.

Further, according to the combination of an information processing device and a portable communication terminal, or, according to the electric field strength (in other words, the distance between the information processing device and the portable communication terminal), it is possible to use the optional function as the function of the information processing device among the rich function of the portable communication terminal. As a result, the function of the information processing device can be easily expanded.

Further, because it is made possible to use as an external device only when the authentication is acquired by moving the portable communication terminal to a short distance capable of short distance communication with the information processing device, it is possible to prevent a careless leakage of information to a third person.

Although the preferred embodiments of the present invention has been described above, it is simply presented by way of example only and the present invention is not limited thereof. Numerous other modifications can be devised by those skilled in the art that will fall within the scope of the principles of the present invention.

This application is based upon and claims the benefit of priority from Japanese Patent Application No. 2009-117598 filed on May 14, 2009 the disclosure of which is incorporated herein in its entirety be reference.

### Industrial Applicability

An information processing device, an external device extension system, an external device extension method, an external device extension program, and a program recording medium according to the present invention can be applied to a device or the like which performs various information processing such as a portable terminal and a personal computer equipped with a communication function such as a mobile phone, PHS (Personal Handy-Phone System), and a PDA (Personal Digital Assistants) to transmit and receive a short distance radio signal with each other by short distance wireless communication.

### Description of Codes

- 100: portable communication terminal
- 101: wireless communication unit
- 102: broadcast reception unit
- 103: short distance wireless communication unit
- 104: camera unit
- 105: display unit
- 106: speech processing unit
- 106a: speech transmission unit
- 106b: speech reception unit
- 107: speaker
- 108: operation unit
- 109: control unit
- 110: storage unit
- 111: authentication information
- 112 and 112A: external function setting table
- 112a: connection information processing device
- 112b: external function
- 112c: electric field strength
- 112d: external function
- 200: information processing device
- 203: short distance wireless communication unit
- 205: display unit
- 208: operation unit
- 209: control unit
- 210: storage unit
- 211: authentication information
- 212 and 212A: portable communication terminal function setting table
- 212a: connection portable communication terminal
- 212b: function
- 212c: electric field strength
- 212d: function
- 220: external function interface unit

## Claims

1. An information processing device comprising:
short distance wireless communication means for transmitting and receiving a short distance radio signal by short distance wireless communication;
storage means in which a plurality of setting functions are registered; and
device control means for selecting a predetermined setting function from said storage means when said short distance wireless communication means receives a short distance radio signal, and sets a function relating to the selected setting function to a transmission source of said short distance radio signal.

2. The information processing device according to claim 1, wherein
said storage means holds identification information on said portable information terminal, and
said device control means acquires identification information on a portable information terminal which transmitted said short distance radio signal, and sets said function to the portable information terminal when the acquired identification information matches with identification information held by said storage means.

3. The information processing device according to claim 2, wherein
said storage means has a function setting table, and said a plurality of setting functions are registered to the function setting table in association with identification information of said transmission source, and
said device control means selects the setting function corresponding to the identification information on said acquired portable information terminal from said function setting table.

4. The information processing device according to any one of claims 1 to3, wherein either one of a storage device function, a camera function, a mouse function, or a key input function is included in said a plurality of setting functions.

5. A function expansion system comprising:
the information processing device according to any one of claims 1 to 4 and a portable information terminal, wherein
said device control means sets the function relating to said selected setting function to said portable information terminal, and
said portable information terminal comprises:
a short distance wireless communication means for transmitting and receiving a short distance radio signal by short distance wireless communication; and
a terminal control means for having said set function operated as an external device of said information processing device.

6. The function extension system according to claim 5 further comprising:
input means for receiving a function setting input from the user and transmitting said received the function setting input to said portable information processing device as a function setting input signal, wherein
said device control means sets a function to said portable information terminal when receiving said short distance radio signal and said function setting input signal.

7. The function expansion system according to claim 6 further comprising:
measurement means for measuring an electric field strength when receiving said function setting input and transmitting to said information processing device, wherein
said storage means has a function setting table and said a plurality of setting functions are registered to the function setting table in association with said electric field strength, and
said function setting table selects a set function corresponding to said received electric field strength from said function setting table.

8. A function expansion method using an information processing device having storage means in which a plurality of setting functions are registered comprising:
selecting a predetermined setting function from said storage means when receiving a short distance radio signal; and
setting a function relating to the selected setting function to a transmission source of said short distance radio signal.

9. A control external device expansion program wherein it is an external device expansion program for controlling a computer of an information processing device comprising a storage means in which a plurality of setting functions are registered, and to have a computer to carry out the procedure of selecting the predetermined setting function from said storage means when receiving a short distance radio signal, and setting a function relating to the selected setting function to a transmission source of said short distance radio signal.

10. A computer-readable recording medium wherein recording a control medium for having a computer of an information processing device equipped with a storage means in which a plurality of setting functions are registered to carry out a procedure for selecting the predetermined setting function from said storage means when receiving a short distance radio signal and setting the function relating to the selected setting function to a transmission source of said short distance radio signal.
